# EUROPEAN PATENT APPLICATION

(11) **EP 4 435 905 A1**
(43) Date of publication of application: **25.09.2024**
(21) Application number: 22911765.0
(22) Date of filing: 14.12.2022
(51) Int. Cl.: H01M 8/021

(54) **STAINLESS STEEL FOR FUEL CELL SEPARATOR AND MANUFACTURING METHOD THEREOF**

(30) Priority: 20.12.2021 KR 20210183089
(71) Applicant: POSCO Co., Ltd, Pohang-si, Gyeongsangbuk-do 37859 (KR)
(72) Inventor: KIM, Kwangmin, Pohang-si Gyeongsangbuk-do 37669 (KR); KIM, Donghoon, Pohang-si Gyeongsangbuk-do 37655 (KR); SEO, Bosung, Pohang-si Gyeongsangbuk-do 37656 (KR); KIM, Jonghee, Daejeon 34200 (KR)
(74) Representative: Nederlandsch Octrooibureau
(86) International application number: PCT/KR2022/020356
(87) International publication number: WO 2023/121132

(57) **Abstract**

Provided are a metal material, for a fuel cell separator, having: five or more fine protrusions of 10 to 100 nm on the metal material surface coming into contact with a GDL in a fuel cell; and a real surface length/protrusion-free apparent surface length ratio of 1.15 or more based on a cross-section observed by a transmission electron microscope. The metal material is characterized by having a contact resistance of 10 mΩ·cm² or less by forming fine protrusions on the surface.

## Description

### [Technical Field]

The present disclosure relates to a stainless steel for polymer fuel cell separators having low contact resistance and a manufacturing method thereof, and more particularly, to a stainless steel for fuel cell separators having low contact resistance by enlarging a contact area with a gas diffusion layer (GDL) by controlling a shape of the surface of the separator.

### [Background Art]

In general, a fuel cell stack has a structure in which cells, each consisting of a membrane electrode assembly (MEA), which includes an electrolyte, electrodes, and a gas diffusion layer (GDL), and a separator are stacked. Therefore, the separator is in contact with the GDL, and contact resistance generated in an interface between the separator and the GDL deteriorates performance of the cells and the fuel cell.

The contact resistance of the separator is mainly affected by two factors. The first factor is a passivated layer, as an oxide layer, formed on the surface of a metal separator. Although the passivated layer is a way to obtain high corrosion resistance, it is preferable that the passivated layer is as thin as possible in terms of contact resistance because the passivated layer is a nonconductive oxide layer. The second factor affecting the contact resistance is a contact area between the separator and the GDL. The separator and the GDL are objects having different surface roughnesses, and a real contact area between two materials in contact with each other significantly affects a contact resistance. As the contact area between the separator and the GDL increases, the contact resistance tends to decrease. As the contact area decreases, the contact resistance tends to increase. Thus, an effect on reducing the contact resistance varies according to the surface shape of the separator.

Ultra-thin materials with a thickness of tens to hundreds of µm have been widely used as separator materials, and the ultra-thin materials undergo bright annealing during a manufacturing process. Therefore, the separator has a bright-annealed surface with almost no protrusions and recessions on the surface. If such a material is directly used as a separator, a problem of increasing contact resistance is caused due to a small contact area with the GDL. Therefore, in order to reduce the contact resistance, the contact area with the GDL needs to be enlarged by forming protrusions and recessions on the surface of the separator, and in this case, the shape of the surface having fine protrusions with heights of tens of nm is advantageous therefor.

### [Disclosure]

### [Technical Problem]

In consideration of limitations and problems of the related art, the present disclosure provides a stainless steel having low contact resistance by forming fine protrusions on the surface as a material for fuel cell separators.

### [Technical Solution]

In accordance with an aspect of the present disclosure, a metal material for fuel cell separators has five or more fine protrusions of 10 to 100 nm on the metal material surface coming into contact with a GDL in a fuel cell, and a real surface length/protrusion-free apparent surface length ratio of 1.15 or more based on a cross-section observed by a transmission electron microscope.

The metal material for fuel cell separators according to another embodiment may be a ferritic stainless steel including, in percent by weight (wt%), 15 to 35% of Cr, 0.02% or less of C, 0.02% or less of N, 0.4% or less of Si, 0.003% or less of S, 0.2% or less of Mn, 2% or less of Cu, and the balance of Fe and other inevitable impurities.

The metal material for fuel cell separators according to another embodiment may be an austenitic stainless steel including, in percent by weight (wt%), 15 to 30% of Cr, 7 to 15% of Ni, 0.09% or less of C, 2.5% or less of Si, 0.003% or less of S, 3% or less of Mn, 3% or less of Mo, 0.3% or less of N, and the balance of Fe and other inevitable impurities.

### [Advantageous Effects]

According to a method of manufacturing a separator according to the present disclosure, a separator having low contact resistance in a fuel cell environment may be prepared without an expensive coating process.

### [Description of Drawings]

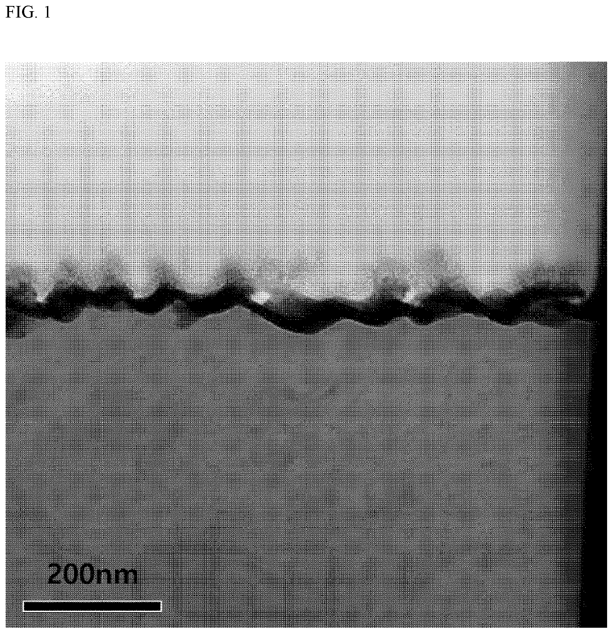

FIG. 1 shows a cross-section of a fuel cell separator according to the present disclosure observed by a transmission electron microscope, wherein the separator has five or more fine protrusions of 10 to 100 nm and a real surface length increases 15% or more compared to a protrusion-free apparent surface length.

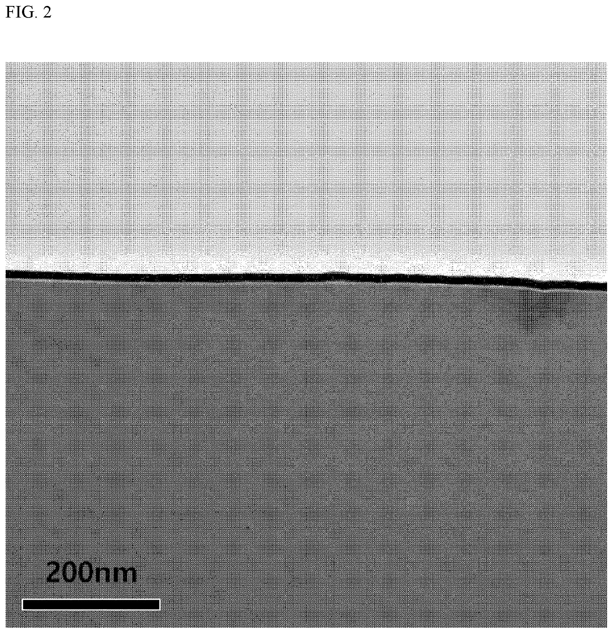

FIG. 2 is a cross-section of a fuel cell separator not having protrusions observed by a transmission electron microscope.

### [Best Mode]

A metal material for fuel cell separators according to an embodiment of the present disclosure has five or more fine protrusions of 10 to 100 nm on the metal material surface coming into contact with a GDL in a fuel cell, and a real surface length/protrusion-free apparent surface length ratio of 1.15 or more based on a cross-section observed by a transmission electron microscope.

### [Modes of the Invention]

A metal material for fuel cell separators according to an embodiment of the present disclosure has five or more fine protrusions of 10 to 100 nm on the metal material surface coming into contact with a GDL in a fuel cell, and a real surface length/protrusion-free apparent surface length ratio of 1.15 or more based on a cross-section observed by a transmission electron microscope.

During cold rolling, macro rolling marks are generated in a rolling direction on the surface of a bright-annealed stainless steel sheet. Such rolling marks have too large-scale to be used as a surface shape to enlarge the contact area between the separator material and the GDL and thus cannot significantly affect contact resistance. In addition, due to non-uniform distribution of the rolling marks, the rolling marks cannot significantly affect the overall surface contact area.

Therefore, by uniformly distributing fine protrusions of 100 nm or less on the surface of the stainless steel, a real surface area may be enlarged compared to the apparent surface area to enlarge a contact area with the GDL and reduce a contact resistance. If the height of the protrusions is too low as less than 10 nm, the effect of protrusions on enlarging surface area is trivial, If the height of protrusions is too high exceeding 100 nm, the number of protrusions per unit area decreases, so that the effect thereof on enlarging surface area also decreases. If fine protrusions with a height of 10 to 100 nm are uniformly formed on the surface, the real surface length may increase by 15% or more compared to the apparent surface length without protrusions, so as to enlarge the contact area with the GDL. If the real surface length increases in one direction by 15% or more, the real contact area is enlarged by 30% or more, thereby reducing the contact resistance. The fine protrusions of 10 to 100 nm means that a large number of protrusions effective for enlarging a contact area with the GDL are present in a unit area. Therefore, the separator according to an embodiment of the present disclosure is characterized by having a contact resistance value of 10 mΩ·cm² or less.

Hereinafter, the unit is wt% unless otherwise stated. In addition, it is to be understood that the terms such as "including" or "having" are intended to indicate the existence of components disclosed in the specification, and are not intended to preclude the possibility that one or more other components may exist or may be added.

### (Ferritic Stainless Steel)

A metal material for fuel cell separators according to an embodiment of the present disclosure may be a ferritic stainless steel including, in percent by weight (wt%), 15 to 35% of Cr, 0.02% or less of C, 0.02% or less of N, 0.4% or less of Si, 0.003% or less of S, 0.2% or less of Mn, 2% or less of Cu, and the balance of Fe and other inevitable impurities.

Also, the metal material for fuel cell separators according to another embodiment of the present disclosure may be the ferritic stainless steel further including at least one selected from the group consisting of Ti, Nb, and V in a total amount of 1.0% or less.

### C: 0.02% or less

C, as an austenite-forming element, enhances high-temperature strength when added. However, an excess of C reacts with Cr to form a Cr carbide, thereby deteriorating corrosion resistance and also deteriorating elongation and weldability in a ferritic steel, and thus the C content may be controlled as low as possible to 0.02% or less.

### N: 0.02% or less

N, as an austenite phase-stabilizing element and as a substitute of Ni, has advantages of improving strength and pitting corrosion resistance, but due to disadvantages of deteriorating workability such as elongation, the N content is controlled to 0.02% or less.

### Si: 0.4% or less

Si improves high-temperature oxidation resistance and corrosion resistance by strengthening a passivated layer in stainless steels, but an excess of Si deteriorates elongation, and thus the Si content is controlled to 0.4% or less.

### S: 0.003% or less

S, as an trace impurity element, is a major element of causing cracks during hot rolling as being segregated into crystal grain boundaries, and thus the S content is controlled as low as possible to 0.003% or less.

### Mn: 0.2% or less

Like N, Mn, as an austenite phase-stabilizing element and as a substitute of Ni, is used for metastability of the austenite phase, and in case of being added to a ferritic steel, Mn increases strength and deteriorates workability, and thus the Mn content is controlled to 0.2% or less.

### Cu: 2% or less

Cu, as an austenite phase-stabilizing element, may improves corrosion resistance, but an excess of Cu may deteriorate hot workability, and thus the Cu content is controlled to 2% or less.

### Cr: 15 to 35%

Cr, as an element promoting formation of an oxide of a stainless steel, is added in amount of 15% or more for corrosion resistance, but an excess of Cr causes formation of dense scales during hot rolling to cause a problem of increasing sticking defects, and thus an upper limit of the Cr content is controlled to 35%.

### Ti, Nb, and V: 1.0% or less in total

Ti, Nb, and V are elements effective for forming a carbonitride from C and N, but toughness is reduced thereby, and thus a sum of these element is controlled to 1.0% or less.

### (Austenitic Stainless Steel)

The metal material for fuel cell separators according to an embodiment of the present disclosure may be an austenitic stainless steel including, in percent by weight (wt%), 15 to 30% of Cr, 7 to 15% of Ni, 0.09% or less of C, 2.5% or less of Si, 0.003% or less of S, 3% or less of Mn, 3% or less of Mo, 0.3% or less of N, and the balance of Fe and other inevitable impurities.

Also, the metal material for fuel cell separators according to another embodiment may be the austenitic stainless steel further including at least one selected from the group consisting of Ti, Nb, and V in a total amount of 1.0% or less.

### C: 0.09% or less

C, as an austenite phase-stabilizing element, is essential in an austenitic stainless steel and increases high-temperature strength when added, but an excess of C reacts with Cr to form Cr carbide, thereby deteriorating not only corrosion resistance but also elongation and weldability in a ferritic steel, and thus the C content may be as low as possible and may be 0.09% or less.

### N: 0.3% or less

N, as an austenite phase-stabilizing element and as a substitute of Ni, has advantages of improving strength and pitting corrosion resistance, but due to disadvantages of deteriorating workability such as elongation, the N content is controlled to 0.3% or less.

### Si: 2.5% or less

Si is an element improving corrosion resistance of a stainless steel, but an excessive amount over 2.5% may deteriorate elongation and deteriorate corrosion resistance by forming SiO₂ oxidative inclusions, and thus the Si content is controlled to 2.5% or less.

### S: 0.003% or less

S, as an trace impurity element, is a major element of causing cracks during hot rolling as being segregated into crystal grain boundaries, and thus the S content is controlled as low as possible to 0.003% or less.

### Mn: 3% or less

Like N, Mn is an austenite phase-stabilizing element and a substitute of Ni, but an excess of Mn deteriorates corrosion resistance, and thus the Mn content is controlled to 3.0% or less.

### Mo: 3% or less

Mo, as an element effective for enhancing corrosion resistance of a stainless steel, but an excess of Mo may cause formation of a sigma phase to deteriorate corrosion resistance and induce embrittlement, and Mo is a high-priced element, and thus the Mo content is controlled to 3% or less.

### Cr: 15 to 30%

Cr, as an element improving corrosion resistance by promoting formation of an oxide of a stainless steel, needs to be added in an amount of 15% or more to obtain corrosion resistance in a fuel cell environment, but an excess of Cr may require addition of a high-priced Ni for stability of an austenite phase, Mn deteriorating corrosion resistance, and N deteriorating workability, and thus the Cr content is controlled to 15% to 30%.

### Ni: 7 to 15%

Because Ni, as an austenite phase-stabilizing element, is high-priced, the Ni content is controlled to 7 to 15% in consideration of economic feasibility.

### Ti, Nb, and V: 1.0% or less in total

Ti, Nb, and V are effective for formation of a carbonitride from C and N contained in a steel, but deteriorates toughness, and thus a sum of the amounts of the elements is controlled to 1.0% or less.

### (Manufacturing Process)

A method of controlling the surface shape of the stainless steel may be performed by the following process.

The surface shape of the stainless steel may be controlled by a chemical method or a mechanical method.

In the case of using a chemical method, the surface shape may be controlled by immersing the stainless steel in an acid solution. The acid solution in which the stainless steel is immersed may be hydrochloric acid, sulfuric acid, nitric acid, or hydrofluoric acid. A mixture of at least two of the acid solutions may be used or the stainless steel may be sequentially immersed in two or more acid solutions.

In addition, the surface shape of the stainless steel may also be controlled by electrolytic treatment and the electrolytic treatment may also be performed before and after immersion in the acid solution.

In the case of using the chemical method, the surface shape may vary according to types, temperatures, concentrations, and the like of the acid solutions, immersion time, and currents supplied for the electrolytic treatment.

For example, a surface shape having excellent contact resistance may be obtained by using 5% to 20% sulfuric acid as an acid solution at 40 to 60°C by electrolytic treatment at a current density of 0.1 to 0.5 A/cm² or by immersing in the acid solution for 30 seconds to 300 seconds, and then in a mixed acid (nitric acid and hydrofluoric acid) at 40°C to 60°C.

Also, for example, a surface having excellent contact resistance may be obtained by immersing in 5 to 20% hydrochloric acid or 5% to 20% hydrofluoric acid, as acid solutions, for 30 seconds to 300 seconds.

In addition, the surface shape of the stainless steel may also be controlled by mechanical polishing rather than the chemical method, and the surface shape may vary according to type, thickness, shape, and distribution of an abrasive during polishing.

However, the surface shape according to the present disclosure is not limited to the above-described chemical or mechanical methods and may be derived by various conditions and methods.

Hereinafter, the present disclosure will be described in more detail by using examples.

These embodiments are provided so that this disclosure will be thorough and complete, and will fully convey the concept of the invention to those skilled in the art. The embodiments of the present disclosure may, however, be embodied in many different forms and should not be construed as being limited to the embodiments set forth herein.

### (Examples)

Table 1 shows alloying elements of ferritic and austenitic stainless steels according to all examples including comparative examples and inventive examples. The stainless steels used in the present disclosure were manufactured by cold rolling stainless steels, each having the composition by using a Z-mill cold roller in a cold rolling process, and then bright annealing the cold-rolled steel sheet in a heat treatment process.

**Table 1**

| **Steel type** | **C** | **Si** | **S** | **Mn** | **Cr** | **Mo** | **Ni, Nb, V, Ti** | **N** | **Cu** |
|---|---|---|---|---|---|---|---|---|---|
| Steel A | 0.008 | 0.1 | 0.0005 | 0.1 | 30 | - | Nb: 0.2 | 0.015 | 0.06 |
| | | | | | | | V: 0.4 | | |
| | | | | | | | Ti: 0.1 | | |
| Steel B | 0.020 | 2.0 | 0.0009 | 0.7 | 23 | 0.2 | Ni: 12 | 0.200 | - |

Steel A is a ferritic stainless steel according to the present disclosure, and Steel B is an austenitic stainless steel according to the present disclosure. In the comparative examples and examples of the present disclosure, relations between contact resistance and surface shape index were identified by adjusting the surface shape of the ferritic and austenitic stainless steels, and the results are shown in Table 2 below.

**Table 2**

| **Experiment No.** | **Steel type** | **Average height of protrusions (µm)** | **No. of protrusions 10 to 100 nm (No./µm)** | **Real surface length/apparen t surface length** | **Contact resistance (mΩ·cm²)** |
|---|---|---|---|---|---|
| Comparative Example 1 | Steel A | 0.26 | 0 | 1.00 | 51.2 |
| Comparative Example 2 | Steel A | 0.19 | 0 | 1.02 | 33.9 |
| Comparative Example 3 | Steel A | 0.18 | 0 | 1.02 | 29.0 |
| Comparative Example 4 | Steel B | 0.28 | 0 | 1.01 | 102.6 |
| Comparative Example 5 | Steel B | 0.20 | 0 | 1.01 | 34.2 |
| Comparative Example 6 | Steel B | 0.18 | 0 | 1.01 | 25.1 |
| Comparative Example 7 | Steel B | 0.16 | 1 | 1.02 | 12.4 |
| Comparative Example 8 | Steel A | 0.15 | 1 | 1.04 | 14.5 |
| Comparative Example 9 | Steel A | 0.14 | 1 | 1.05 | 12.5 |
| Example 1 | Steel B | 0.15 | 5 | 1.15 | 9.6 |
| Example 2 | Steel A | 0.13 | 9 | 1.18 | 8.1 |
| Example 3 | Steel B | 0.14 | 11 | 1.19 | 7.9 |
| Example 4 | Steel A | 0.13 | 11 | 1.22 | 6.3 |
| Example 5 | Steel B | 0.13 | 12 | 1.27 | 6.6 |
| Example 6 | Steel B | 0.14 | 13 | 1.31 | 6.0 |
| Example 7 | Steel A | 0.14 | 16 | 1.36 | 5.7 |

Specifically, Table 2 is a table showing analysis results of the surfaces of the prepared cold-rolled steel sheets and contact resistance measurement values, and average heights of protrusions, the numbers of protrusions of 10 to 100 nm, and the real surface length/apparent surface length ratios were measured by using cross-sections of the steel sheets observed with a transmission electron microscope (TEM). Surface protrusions effective for contact resistance are fine protrusions with a height of tens of nm, and it is difficult to observe these protrusions with a scanning electron microscope (SEM) having a low magnification. The values of Table 2 were obtained by using a transmission electron microscope with a high magnification of 100,000 times or more. And 10 points were observed per each sample and then averaged. Evaluation of interface contact resistance of Table 2 was performed by preparing two sheets of the prepared material and disposing carbon paper (SGL-10BA), used as a gas diffusion layer, therebetween, and then evaluating interfacial contact resistance 5 times at a contact pressure of 100 N/cm². Then, an average was calculated therefrom.

Referring to Table 2, Examples 1 to 7 including fine protrusions according to the present disclosure on the surface had contact resistances of 10 mΩ·cm² or less indicating excellent contact resistance. Although the average height of the protrusions does not have a significant correlation with the contact resistance, contact resistance tends to decrease as the number of fine protrusions of 10 to 100 nm increases. In addition, as the number of fine protrusions of 10 to 100 nm increases on the surface, the real surface length tends to increase relative to the apparent surface length. Based thereon, it is considered that the contact resistance decreases as the real contact area of the separator with the GDL increases.

However, the surfaces of Comparative Examples 1 to 9 had no or few fine protrusions of 10 to 100 nm proposed by the present disclosure, and contact resistances thereof exceeded 10 mΩ·cm².

### [Industrial Applicability]

According to the method of manufacturing a separator according to the present disclosure, a separator having low contact resistance in a fuel cell environment may be manufactured without an expensive coating process, and thus the present disclosure has industrial applicability.

## Claims

1. A metal material for fuel cell separators having five or more fine protrusions of 10 to 100 nm on the metal material surface coming into contact with a gas diffusion layer (GDL) in a fuel cell and a real surface length/protrusion-free apparent surface length ratio of 1.15 or more based on a cross-section observed by a transmission electron microscope (TEM).

2. The metal material for fuel cell separators according to claim 1, wherein the metal material is a ferritic stainless steel comprising, in percent by weight (wt%), 15 to 35% of Cr, 0.02% or less of C, 0.02% or less of N, 0.4% or less of Si, 0.003% or less of S, 0.2% or less of Mn, 2% or less of Cu, and the balance of Fe and other inevitable impurities.

3. The metal material for fuel cell separators according to claim 2, wherein the ferritic stainless steel further comprises at least one selected from the group consisting of Ti, Nb, and V in a total amount of 1.0% or less.

4. The metal material for fuel cell separators according to claim 1, wherein the metal material is an austenitic stainless steel comprising, in percent by weight (wt%), 15 to 30% of Cr, 7 to 15% of Ni, 0.09% or less of C, 2.5% or less of Si, 0.003% or less of S, 3% or less of Mn, 3% or less of Mo, 0.3% or less of N, and the balance of Fe and other inevitable impurities.

5. The metal material for fuel cell separators according to claim 4, wherein the austenitic stainless steel further comprises at least one selected from the group consisting of Ti, Nb, and V in a total amount of 1.0% or less.
